# FASCICULE DE BREVET EUROPEEN

(11) **EP 1 351 848 B1**
(45) Date de publication et mention de la délivrance du brevet: **27.02.2008**
(21) Numéro de dépôt: 01995740.6
(22) Date de dépôt: 19.12.2001
(51) Int. Cl.: B60T 11/26

(54) **DISPOSITIF DE MA TRE-CYLINDRE ET DE SERVOMOTEUR PNEUMATIQUE POUR UN SYSTEME DE FREINAGE**
HAUPTZYLINDER UND PNEUMATISCHE STELLGLIEDVORRICHTUNG FÜR EIN BREMSSYSTEM
MASTER CYLINDER AND PNEUMATIC ACTUATOR DEVICE FOR A BRAKING SYSTEM

(30) Priorité: 02.01.2001 FR 0100053
(43) Date de publication de la demande: 15.10.2003
(73) Titulaire: ROBERT BOSCH GMBH, 70442 Stuttgart (DE)
(72) Inventeur: LEBOISNE, Cédric, F-75011 PARIS (FR)
(74) Mandataire: Hurwic, Aleksander Wiktor
(86) Numéro de dépôt international: PCT/FR2001/004062
(87) Numéro de publication internationale: WO 2002/053437

(56) Documents cités:
- WO-A-99/17967
- DE-A- 19 725 260
- US-A- 4 441 520

## Description

L'invention concerne un dispositif de maître-cylindre et servomoteur pneumatique pour un système de freinage de véhicule automobile.

Le maître-cylindre et le servomoteur pneumatique d'assistance au freinage qui font partie d'un système de freinage de véhicule automobile sont livrés au constructeur du véhicule sous forme d'un ensemble unitaire.

Lorsque l'espace disponible dans le compartiment moteur du véhicule le permet, un réservoir de liquide de frein en une seule pièce est monté sur le maître-cylindre et fait partie de l'ensemble unitaire livré au constructeur, qui reçoit ainsi un ensemble complet qu'il suffit de monter dans le compartiment moteur.

Par contre, lorsque l'espace disponible dans le compartiment moteur n'est pas suffisant, le réservoir de liquide de frein est en deux parties, l'une étant un petit réservoir ou "mini-réservoir" monté sur le maître-cylindre et l'autre étant un réservoir de plus grand volume qui est séparé du maître-cylindre et qui doit être fixé en un emplacement approprié dans le compartiment moteur et ensuite relié au mini-réservoir par un conduit flexible de passage de liquide. Le document US 4 441 520 decrit un reservoir en deux parties conventionel.

En général, le réservoir séparé et l'ensemble formé par le maître-cylindre, le mini-réservoir et le servomoteur pneumatique sont livrés au constructeur par des fournisseurs différents, ce qui oblige le constructeur à gérer lui-même les approvisionnements et les stocks de ces deux composants et de leurs moyens de connexion, et à assurer la connexion de ces deux composants au montage de l'ensemble de freinage dans le véhicule, ce qui est plus long, plus compliqué et plus coûteux que dans le premier cas cité, où il suffit au constructeur de monter un ensemble unitaire dans un compartiment moteur.

L'invention a notamment pour but d'éviter ces inconvénients.

Elle a pour objet un dispositif de maître-cylindre et de servomoteur pneumatique pour un système de freinage de véhicule automobile, qui comprend un réservoir de liquide de frein en deux parties et qui peut néanmoins être monté dans un compartiment moteur de véhicule automobile de façon aussi simple et rapide que s'il s'agissait d'un dispositif avec un réservoir de liquide de frein en une seule partie.

Elle propose à cet effet un dispositif de maître-cylindre et de servomoteur pneumatique comprenant un petit réservoir de liquide de frein monté sur le maître-cylindre, caractérisé en ce qu'il comprend également des moyens de fixation provisoire d'un réservoir séparé de liquide de frein.

Ainsi, selon l'invention, le réservoir séparé est provisoirement fixé sur lé dispositif de maître-cylindre et de servomoteur qui est livré au constructeur automobile, de sorte que celui-ci reçoit un ensemble unitaire qu'il fixe dans le compartiment moteur du véhicule, après quoi il démonte de cet ensemble le réservoir séparé et il le fixe à l'endroit voulu dans le compartiment moteur du véhicule.

Cela évite au constructeur de gérer des approvisionnements et des stocks de réservoirs séparés et cela permet également au fournisseur de l'ensemble unitaire d'effectuer un contrôle qualité sur le réservoir séparé qu'il reçoit du fabriquant.

Avantageusement, le réservoir séparé est, dans l'ensemble livré au constructeur, relié au petit réservoir par un conduit de passage de liquide, qui est le conduit définitif de liaison entre les deux réservoirs et dont la longueur a été déterminée en fonction de la distance qui sépare les deux réservoirs dans le compartiment moteur du véhicule et du chemin que doit suivre ce conduit de liaison dans le compartiment moteur.

Le constructeur est ainsi déchargé de tous les problèmes relatifs à la connexion entre les deux parties du réservoir de liquide de frein.

Selon d'autres caractéristiques de l'invention, les moyens de fixation provisoire du réservoir séparé sont du type à clipsage ou encliquetage élastique, ou bien du type vis-écrou.

De façon particulièrement avantageuse, au moins une partie des moyens de fixation provisoire est formée par des moyens pré-existants du maître-cylindre et/ou du servomoteur.

Dans un premier mode de réalisation de l'invention, les moyens de fixation provisoire comprennent des premiers moyens formés sur le servomoteur pneumatique et des seconds moyens formés sur le réservoir séparé. En particulier, les premiers moyens peuvent comprendre une bague d'étanchéité en matière élastiquement déformable, montée dans un orifice d'une paroi du servomoteur pour recevoir et retenir un doigt ou analogue formé sur une paroi du réservoir séparé.

Avantageusement, cet orifice de la paroi du servomoteur a une autre fonction que celle de la fixation provisoire du réservoir séparé et est par exemple destiné à recevoir ultérieurement des moyens de liaison à une source de dépression.

Dans un autre mode de réalisation de l'invention, les moyens de fixation provisoire du réservoir séparé comprennent une patte fixée sur le dispositif de maître-cylindre et de servomoteur et comportant un orifice de passage d'un embout solidaire du réservoir, et des moyens de retenue de cette patte sur l'embout.

Avantageusement, cet embout forme un orifice de remplissage et de purge du réservoir et reçoit un bouchon de fermeture qui constitue les moyens précités de retenue de ladite patte.

Celle-ci peut elle-même être fixée sur le dispositif de maître-cylindre et de servomoteur par une liaison vis-écrou, par exemple au moyen d'une tige filetée de fixation du servomoteur et/ou du maître-cylindre.

Dans encore un autre mode de réalisation, le réservoir séparé est monté sur le petit réservoir par des moyens d'encliquetage élastique comprenant un doigt ou un plot formé en saillie sur l'un des réservoirs et engagé et retenu dans une bague de matière élastiquement déformable montée dans un trou borgne de l'autre réservoir.

L'invention sera mieux comprise et d'autres caractéristiques, détails et avantages de celle-ci apparaîtront plus clairement à la lecture de la description qui suit, faite à titre d'exemple en référence aux dessins annexés dans lesquels :
- la figure 1 est une vue schématique en coupe axiale d'un dispositif selon l'invention ;
- la figure 2 est une vue schématique en coupe axiale d'une variante de réalisation de ce dispositif;
- la figure 3 est une vue schématique en coupe axiale d'une autre variante de réalisation du dispositif selon l'invention ;
- la figure 4 est une vue schématique agrandie en coupe d'un détail du dispositif représenté en figure 3.

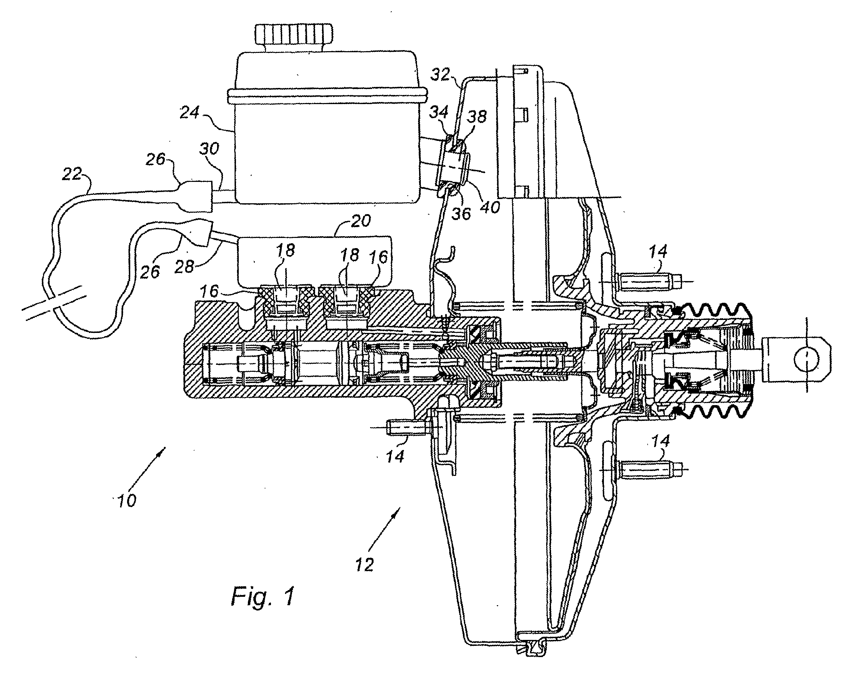

Le dispositif représenté en figure 1 comprend un maître-cylindre tandem 10 et un servomoteur pneumatique 12 d'assistance au freinage, qui sont assemblés l'un à l'autre de la façon habituelle et qui comportent des moyens de fixation sur un support dans un compartiment moteur de véhicule automobile, ces moyens de fixation étant par exemple tels que des vis 14 portées par l'enveloppe du servomoteur 12.

Le maître-cylindre 10 comprend deux conduits d'alimentation en liquide de frein, débouchant sur la face supérieure du corps du maître-cylindre et dans lesquels sont montées des bagues 16 de matière élastiquement déformable pour la réception et la fixation des embouts tubulaires 18 d'un mini-réservoir 20 de liquide de frein, qui est ainsi monté sur le maître-cylindre par encliquetage élastique.

Ce mini-réservoir 20 a un volume faible pour être logeable au-dessus du maître-cylindre dans l'espace disponible dans le compartiment moteur du véhicule, et est relié par un conduit flexible 22 à un réservoir séparé 24 de liquide de frein, le conduit 22 comprenant à ses extrémités des embouts 26 ou d'autres moyens de connexion sur des embouts rigides 28, 30 formés respectivement sur le mini-réservoir 20 et sur le réservoir séparé 24.

Ce réservoir 24 est destiné à être fixé en un emplacement approprié du compartiment moteur du véhicule automobile, à distance de l'ensemble formé par le maître-cylindre 10 et le servomoteur 12, la longueur du conduit flexible 22 étant déterminée en fonction de la distance qui sépare les deux réservoirs et du chemin que doit suivre le conduit flexible 22 dans le compartiment moteur du véhicule automobile.

Comme indiqué dans ce qui précède, le réservoir 24 et l'ensemble comportant le maître-cylindre 10, le servomoteur 12 et le mini-réservoir 20 sont, dans la technique antérieure, livrés de façon séparée au constructeur du véhicule automobile qui doit fixer l'ensemble 10, 12, 20 dans le compartiment moteur du véhicule au moyen des vis 14, fixer le réservoir 24 à l'endroit voulu dans le compartiment moteur, et connecter ensuite les réservoirs 20 et 24 au moyen du conduit flexible 22 dont les embouts 26 sont emmanchés à force sur les embouts 28, 30 ou fixés d'une autre façon sur ces embouts.

Selon la présente invention, l'ensemble 10, 12, 20 et le réservoir séparé 24 sont livrés au constructeur du véhicule automobile sous forme d'un ensemble unitaire grâce à des moyens de fixation provisoire du réservoir 24 sur l'ensemble 10, 12, 20.

Dans l'exemple de la figure 1, les moyens de fixation provisoire comprennent des premiers moyens de fixation formés sur l'enveloppe 32 du servomoteur 12 et des seconds moyens de fixation formés sur le réservoir 24.

Les premiers moyens de fixation comprennent une bague 34 en matière élastiquement déformable telle que du caoutchouc ou analogue, montée dans un orifice 36 de l'enveloppe 32 et recevant par clipsage ou encliquetage élastique un doigt 38 formé en saillie sur le réservoir 24.

Le doigt 38 est réalisable d'une , pièce par moulage avec le réservoir 24, qui est en une matière plastique telle que du polypropylène.

A son extrémité libre, le doigt 38 se termine par une tête élargie 40 que l'on peut faire passer dans la bague 34 en déformant élastiquement celle-ci et qui sert de moyen de retenue du doigt 38 dans la bague 34.

De façon particulièrement intéressante, la bague 34 et l'orifice 36 de l'enveloppe 32 du servomoteur 12 ont une fonction première, qui est le montage de moyens de liaison à une source de dépression. L'invention utilise donc, pour la fixation provisoire du réservoir 24, des moyens pré-existants du servomoteur 12. En d'autres termes, l'invention ne nécessite que de former le doigt 38 par moulage sur le réservoir 24.

L'utilisation de ce dispositif ressort à l'évidence de ce qui précède:

L'ensemble unitaire qui est fourni à un constructeur automobile comporte, non seulement le maître-cylindre 10 et le servomoteur assemblés l'un à l'autre et le mini-réservoir 20 monté sur le maître-cylindre 10, mais également le réservoir 24 fixé, de façon provisoire sur le servomoteur 12 et relié par le conduit flexible 22 au mini-réservoir 20.

Le constructeur qui reçoit cet ensemble le fixe dans le compartiment moteur du véhicule au moyen des vis 14, puis démonte le réservoir 24 du servomoteur 12 simplement en exerçant une traction sur le réservoir 24 pour sortir la tête 40 de la bague élastiquement déformable 34, après quoi il fixe le réservoir 24 à l'endroit approprié dans le compartiment moteur.

Ensuite, les moyens de liaison à une source de dépression peuvent être montés dans la bague 34 de l'enveloppe 32 du servomoteur.

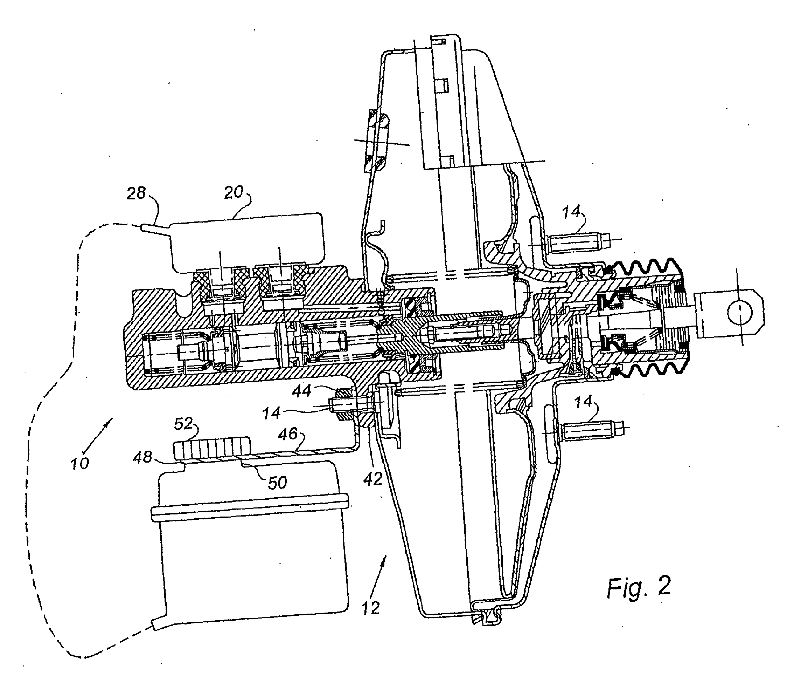

Dans la variante de réalisation représentée en figure 2, au moins une des vis 14 précitées participe à la fixation du maître-cylindre 10 et du servomoteur 12 l'un à l'autre. Pour cela, la vis 14 passe à travers un orifice d'une bride ou d'un appendice radial 42 du maître-cylindre et reçoit un écrou vissé 44.

Les moyens de fixation provisoire du réservoir 24 sur l'ensemble maître-cylindre 10-servomoteur 12 comprennent une patte 46, par exemple coudée, dont une extrémité comporte un orifice de montage sur la vis 14 et dont l'autre extrémité 48 comporte un orifice de montage sur un embout tubulaire 50 formant orifice de remplissage et de purge du réservoir séparé 24. Cet embout 50 est fileté extérieurement et reçoit un bouchon vissé 52 qui fixe l'extrémité 48 de la patte 46 sur le réservoir 24. De même, l'écrou 44 maintient l'autre extrémité de la patte 46 fixée sur la vis 14.

Comme dans le mode de réalisation précédent, un conduit flexible 22 relie les embouts tubulaire 28, 30 des réservoirs 20 et 24.

Ainsi, le réservoir séparé 24 forme avec le maître-cylindre 10, le servomoteur 12 et le mini-réservoir 20 monté sur le maître-cylindre 10, un ensemble unitaire qui est livré au constructeur du véhicule automobile. Celui-ci peut, comme dans le mode de réalisation précédent, procéder d'abord à la fixation du servomoteur 12 dans le compartiment moteur du véhicule automobile, au moyen des vis 14 précitées, puis pour libérer le réservoir 24, dévisse le bouchon de fermeture 52 et sort l'embout 50 de l'orifice formé dans l'extrémité correspondante 48 de la patte 46, celle-ci pouvant rester fixée sur la vis 14 précitée par l'écrou de serrage 44.

Bien entendu, en variante, le bouchon de fermeture 52 peut être monté sur l'embout 50 par un système à baïonnette ou par clipsage.

De même, les orifices formés dans les extrémités de la patte 46 pour sa fixation sur la vis 14 et sur l'embout 50 peuvent être remplacés par des fentes que l'on peut engager radialement sur la vis 14 et sur l'embout 50.

On notera que, comme dans le mode de réalisation précédent, l'un des moyens de fixation provisoire du réservoir 24 est un moyen pré-existant sur le maître-cylindre 10 et/ou sur le servomoteur 12. Un des avantages de cette variante de réalisation de l'invention est qu'il suffit d'une patte 46 conformée de la façon voulue pour fixer de façon provisoire un réservoir 24 pré-existant sur un ensemble formé d'un maître-cylindre 10 et d'un servomoteur 12 pré-existants.

Cette variante de l'invention est donc extrêmement simple et peu coûteuse à mettre en oeuvre.

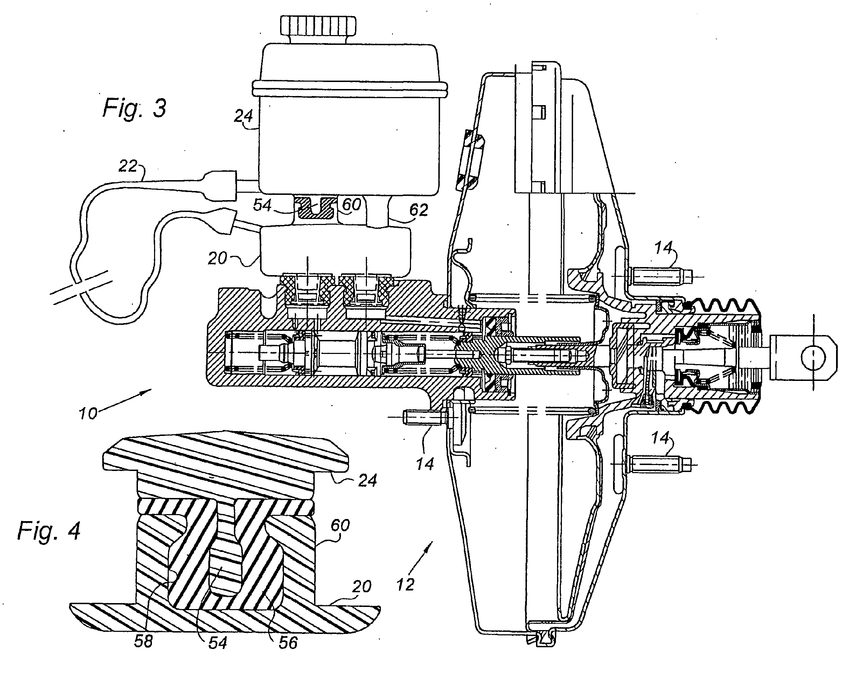

Dans une autre variante de réalisation représentée schématiquement aux figures 3 et 4, le réservoir séparé 24 est fixé de façon provisoire sur le mini-réservoir 20 par encliquetage élastique. Pour cela, une paroi, par exemple la paroi de fond du réservoir 24, est formée de moulage avec un doigt ou un plot en saillie 54 qui est engagé dans une bague 56 en matière élastiquement déformable montée dans un orifice borgne 58 d'une paroi, par exemple supérieure, du mini-réservoir 20.

De préférence, cet orifice borgne 58 est formé par le volume interne d'un plot cylindrique 60 formé en saillie sur la paroi supérieure du mini-réservoir 20.

Eventuellement, un plot de support 62 peut être formé en saillie sur la paroi de fond du réservoir 24, parallèlement au plot 54 précité et vient s'appuyer sur la paroi supérieure du mini-réservoir 20, pour un meilleur support du réservoir 24 pendant sa fixation provisoire sur le mini-réservoir 20.

On utilise cette variante de réalisation de la même façon que déjà décrite, en procédant d'abord à la fixation de l'ensemble maître-cylindre 10-servomoteur 12 dans le compartiment moteur au moyen des vis 14, puis en séparant le réservoir 24 du mini-réservoir 20 et en le fixant à l'endroit voulu dans le compartiment moteur.

On notera que la variante de réalisation des figures 3 et 4 peut être mise en oeuvre de façon simple et peu coûteuse grâce à une modification mineure des réservoirs 20 et 24.

## Revendications

1. - Dispositif de maître-cylindre et de servomoteur pneumatique pour un système de freinage de véhicule automobile, comprenant un petit réservoir (20) de liquide de frein monté sur le maître-cylindre (10), **caractérisé en ce qu'**il comprend également des moyens de fixation provisoire d'un réservoir séparé (24) de liquide de frein.

2. - Dispositif selon la revendication 1, **caractérisé en ce que** lesdits moyens de fixation provisoire sont du type à clipsage ou encliquetage élastique.

3. - Dispositif selon la revendication 1, **caractérisé en ce que** les moyens de fixation provisoire sont du type vis-écrou.

4. - Dispositif selon l'une des revendications précédentes, **caractérisé en ce que** le réservoir séparé (24) est relié par un conduit (22) de passage de liquide au petit réservoir. (20) monté sur le maître-cylindre (10).

5. - Dispositif selon l'une des revendications précédentes, **caractérisé en ce qu'**au moins une partie des moyens de fixation provisoire est formée par des moyens pré-existants du maître-cylindre (10) et/ou du servomoteur (12).

6. - Dispositif selon l'une des revendications précédentes, **caractérisé en ce que** les moyens de fixation provisoire comprennent des premiers moyens formés sur le servomoteur (12) et des seconds moyens formés sur le réservoir séparé (24).

7. - Dispositif selon la revendication 6, **caractérisé en ce que** les premiers moyens comprennent une bague (34) en matière élastiquement déformable montée dans un orifice (36) d'une paroi du servomoteur (12) pour recevoir et retenir un doigt (38) formé en saillie sur une paroi du réservoir séparé (24)

8. - Dispositif selon la revendication 7, **caractérisé en ce que** lesdits premiers moyens (34, 36) sont destinés à recevoir ultérieurement des moyens de liaison à une source de dépression.

9. - Dispositif selon la revendication 7 ou 8, **caractérisé en ce que** le doigt (38) précité est formé d'une pièce par moulage avec le réservoir séparé (24).

10. - Dispositif selon l'une des revendications 1 à 5, **caractérisé en ce que** les moyens de fixation provisoire comprennent une patte (46) fixée sur le dispositif de maître-cylindre (10) et de servomoteur (12) et comportant un orifice de passage d'un embout (50) solidaire du réservoir séparé (24), et des moyens (52) de retenue de la patte (46), sur l'embout (50).

11. - Dispositif selon la revendication 10, **caractérisé en ce que** l'embout (50) précité forme un orifice de remplissage et de purge du réservoir séparé (24) et reçoit un bouchon (52) de fermeture formant les moyens de retenue de la patte (46).

12. - Dispositif selon la revendications 10 ou 11, **caractérisé en ce que** ladite patte (46) comprend des moyens de montage sur une vis (14) de fixation du servomoteur (12) et/ou du maître-cylindre (10).

13. - Dispositif selon l'une des revendications 1 à 5, **caractérisé en ce que** le réservoir séparé (24) est monté sur le petit réservoir (20) par des moyens d'encliquetage élastique comprenant un doigt ou plot (54) formé en saillie sur l'un des réservoirs et engagé et retenu dans une bague (56) de matière élastiquement déformable montée dans un trou borgne (58) d'une paroi de l'autre réservoir.

## Claims

1. Master cylinder and pneumatic booster device for a motor vehicle braking system, comprising a small reservoir (20) of brake fluid mounted on the master cylinder (10), **characterized in that** it also comprises means for temporarily securing a separate brake fluid reservoir (24).

2. Device according to Claim 1, **characterized in that** the said temporary-securing means are of the clip-fastening or elastic snap-fastening type.

3. Device according to Claim 1, **characterized in that** the temporary-securing means are of the screw-nut type.

4. Device according to one of the preceding claims, **characterized in that** the separate reservoir (24) is connected by a fluid passage duct (22) to the small reservoir (20) mounted on the master cylinder (10).

5. Device according to one of the preceding claims, **characterized in that** at least part of the temporary-securing means is formed of means that already exist on the master cylinder (10) and/or on the booster (12).

6. Device according to one of the preceding claims, **characterized in that** the temporary-securing means comprise first means formed on the booster (12) and second means formed on the separate reservoir (24).

7. Device according to Claim 6, **characterized in that** the first means comprise a ring (34) made of elastically deformable material mounted in an orifice (36) of one wall of the booster (12) to accommodate and retain a finger (38) formed so that it projects on a wall of the separate reservoir (24).

8. Device according to Claim 7, **characterized in that** the said first means (34, 36) are intended subsequently to take means of connection to a source of partial vacuum.

9. Device according to Claim 7 or 8, **characterized in that** the aforementioned finger (38) is formed integrally with the separate reservoir (24) by moulding.

10. Device according to one of Claims 1 to 5, **characterized in that** the temporary-securing means comprise a lug (46) fixed to the device consisting of the master cylinder (10) and of the booster (12), and comprising a passage orifice for an end piece (50) firmly attached to the separate reservoir (24), and means (52) for retaining the lug (46) on the end piece (50).

11. Device according to Claim 10, **characterized in that** the aforementioned end piece (50) forms an orifice for filling and emptying the separate reservoir (24) and takes a shut-off cap (52) that forms the means of retaining the lug (46).

12. Device according to Claim 10 or 11, **characterized in that** the said lug (46) comprises means for mounting on a screw (14) for.securing the booster (12) and/or the master cylinder (10).

13. Device according to one of Claims 1 to 5, **characterized in that** the separate reservoir (24) is mounted on the small reservoir (20) via elastic snap-fastening means comprising a finger or stud (54) formed so that it projects on one of the reservoirs and engaged and retained in a ring (56) made of elastically deformable material mounted in a blind hole (58) in a wall of the other reservoir.

## Patentansprüche

1. Vorrichtung aus Hauptzylinder und pneumatischem Servomotor für ein Kraftfahrzeugbremssystem, mit einem kleinen Bremsflüssigkeitsbehälter (20), der am Hauptzylinder (10) angebracht ist, **dadurch gekennzeichnet, dass** sie auch Mittel zur vorläufigen Befestigung eines getrennten Bremsflüssigkeitsbehälters (24) aufweist.

2. Vorrichtung nach Anspruch 1, **dadurch gekennzeichnet, dass** die Mittel zur vorläufigen Befestigung vom Typ mit elastischem Klipsen oder Einschnappen sind.

3. Vorrichtung nach Anspruch 1, **dadurch gekennzeichnet, dass** die Mittel zur vorläufigen Befestigung vom Typ Schraube-Mutter sind.

4. Vorrichtung nach einem der vorhergehenden Ansprüche, **dadurch gekennzeichnet, dass** der getrennte Behälter (24) über eine Flüssigkeitsdurchlassleitung (22) mit dem am Hauptzylinder (10) angebrachten kleinen Behälter (20) verbunden ist.

5. Vorrichtung nach einem der vorhergehenden Ansprüche, **dadurch gekennzeichnet, dass** mindestens ein Teil der Mittel zur vorläufigen Befestigung durch bereits vorhandene Mittel des Hauptzylinders (10) und/oder des Servomotors (12) gebildet ist.

6. Vorrichtung nach einem der vorhergehenden Ansprüche, **dadurch gekennzeichnet, dass** die Mittel zur vorläufigen Befestigung erste Mittel, die am Servomotor (12) ausgebildet sind, und zweite Mittel aufweisen, die am getrennten Behälter (24) ausgebildet sind.

7. Vorrichtung nach Anspruch 6, **dadurch gekennzeichnet, dass** die ersten Mittel einen Ring (34) aus elastisch verformbarem Material aufweisen, der in einer Öffnung (36) einer Wand des Servomotors (12) angebracht ist, um einen Zapfen (38) aufzunehmen und zu halten, der an einer Wand des getrennten Behälters (24) vorstehend ausgebildet ist.

8. Vorrichtung nach Anspruch 7, **dadurch gekennzeichnet, dass** die ersten Mittel (34, 36) dazu bestimmt sind, zu einem späteren Zeitpunkt Mittel zur Verbindung mit einer Unterdruckquelle aufzunehmen.

9. Vorrichtung nach Anspruch 7 oder 8, **dadurch gekennzeichnet, dass** der oben genannte Zapfen (38) durch Formen aus einem Stück mit dem getrennten Behälter (24) gebildet ist.

10. Vorrichtung nach einem der Ansprüche 1 bis 5, **dadurch gekennzeichnet, dass** die Mittel zur vorläufigen Befestigung eine Lasche (46), die an der Vorrichtung aus Hauptzylinder (10) und Servomotor (12) befestigt ist und eine Öffnung für die Durchführung eines mit dem getrennten Behälter (24) fest verbundenen Ansatzstücks (50) aufweist, und Mittel (52) zum Halten der Lasche (46) am Ansatzstück (50) aufweisen.

11. Vorrichtung nach Anspruch 10, **dadurch gekennzeichnet, dass** das oben genannte Ansatzstück (50) eine Öffnung zur Befüllung und Entleerung des getrennten Behälters (24) bildet und einen Verschlussstopfen (52) aufnimmt, der die Mittel zum Halten der Lasche (46) bildet.

12. Vorrichtung nach Anspruch 10 oder 11, **dadurch gekennzeichnet, dass** die Lasche (46) Mittel zum Anbringen an einer Befestigungsschraube (14) des Servomotors (12) und/oder des Hauptzylinders (10) aufweist.

13. Vorrichtung nach einem der Ansprüche 1 bis 5, **dadurch gekennzeichnet, dass** der getrennte Behälter (24) über elastische Einschnappmittel am kleinen Behälter (20) angebracht ist, die einen Zapfen oder Stift (54) aufweisen, der an einem der Behälter vorstehend ausgebildet und in einen Ring (56) aus elastisch verformbarem Material eingesetzt und darin gehalten ist, welcher in einem Sackloch (58) einer Wand des anderen Behälters angebracht ist.
